# EUROPEAN PATENT SPECIFICATION

(11) **EP 4 467 433 B1**
(45) Date of publication and mention of the grant of the patent: **11.02.2026**
(21) Application number: 23185871.3
(22) Date of filing: 17.07.2023
(51) Int. Cl.: B62K 21/12, B62K 21/26, B62J 33/00

(54) **HEATED SURFACE CONTROL VIA MULTIPLE INPUT DEVICES**
BEHEIZTE OBERFLÄCHENSTEUERUNG ÜBER MEHRERE EINGABEVORRICHTUNGEN
COMMANDE DE SURFACE CHAUFFÉE PAR L'INTERMÉDIAIRE DE MULTIPLES DISPOSITIFS D'ENTRÉE

(30) Priority: 25.04.2023 US 202363461836 P
(43) Date of publication of application: 27.11.2024
(73) Proprietor: Harley-Davidson Motor Company, Inc., Milwaukee, WI 53208 (US)
(72) Inventor: FRYE, Seth T., Wauwatosa, 53213 (US); LICHTERMAN, Kevin, Milwaukee, 53208 (US)
(74) Representative: MERH-IP Matias Erny Reichl Hoffmann Patentanwälte PartG mbB

(56) References cited:
- CH-A2- 718 210
- US-A1- 2020 114 999

## Description

### RELATED APPLICATIONS

This application claims priority to U.S. Provisional Application No. 63/461,836, filed April 25, 2023.

### FIELD

Embodiments described herein relate to systems and methods of controlling a heated surface on a vehicle, such as motorcycle handgrips, via multiple input devices. The United States Patent Publication No. US 2020/114 999 A1 teaches a vehicle with a heater and a control method and mechanism therefore. The heater may be controlled to a selected temperature, such as by an operator. The heating system may be controlled substantially precisely, such as within a selected range of a temperature selected by the user. Swiss Patent Publication No. CH 718 210 A2 discloses a heating device for a handle which is arranged on a handlebar of two- or three-wheeled vehicles and in particular a bicycle.

### SUMMARY

A first aspect of the present invention relates to a handgrip heating system for a vehicle according to claim 1. A second aspect of the present invention relates to a method for operating a heating element of a handgrip heating system for a vehicle according to claim 16. Further aspects of the invention are set forth in the dependent claims, the drawings, and the description of embodiments. One or more surfaces of a vehicle that interface with a user (also referred to herein as "user contact surface") may be heated for user comfort and enjoyment. Such heated surfaces, such as, for example, handgrips on a motorcycle, may be controlled via an input device. For example, a vehicle may include a touchscreen configured to display a graphical user interface for controlling many aspects of the vehicle and providing extensive amounts of information to a user (e.g., speed, fuel capacity, engine operation, navigational or directional information, and the like), wherein input received via the touchscreen may control a heated surface of the vehicle (e.g., turn the heated surface on or off, set a temperature level, etc.). While the touchscreen may provide an easy-to-use and informative interface for controlling many aspects of the vehicle, including one or more heated surfaces, in instances where the touchscreen malfunctions or the user is unable to interface with the touchscreen, the user cannot control a heated surface, which may impair the user's use or enjoyment in using the vehicle.

Accordingly, embodiments described herein provide multiple input mechanisms for controlling a heated user contact surface of a vehicle to address these and other problems.

For example, one embodiment provides a heated surface system for a vehicle including a heating element positioned proximate to a user contact surface of the vehicle, a first input device for receiving user input for controlling the heating element and is communicatively coupled to an electronic control unit over a first connection, and a second input device for receiving user input for controlling the heating element and is communicatively coupled to the electronic control unit over a second connection different from the first connection, wherein the electronic control unit is configured to control the heating element based on user input received via the first input device or the second input device.

As another example, one embodiment provides a method for operating a heating element of a heated surface system for a vehicle. The method includes receiving, from a first input device over a first connection, user input for controlling the heating element and receiving, from a second input device over a second connection, user input for controlling the heating element, the second connection being different from the first connection. The method further includes controlling the heating element based on the user input received from the first input device or the second input device, the heating element being positioned proximate to a user contact surface of the vehicle.

In yet another example, one embodiment provides a heated surface device for a vehicle. The device includes a heating element positioned proximate to a user contact surface of the vehicle, a first input device for receiving user input for controlling the heating element, the first input device communicatively coupled to an electronic control unit over a first connection, and a second input device for receiving user input for controlling the heating element, the second input device communicatively coupled to the electronic control unit over a second connection different from the first connection, wherein the electronic control unit is configured to control the heating element based on user input received via the first input device or the second input device.

Other aspects will become apparent by consideration of the detailed description and accompanying drawings.

### BRIEF DESCRIPTION OF THE DRAWINGS

FIG. 1A schematically illustrates a heated surface system for a vehicle according to some embodiments.
FIG. 1B schematically illustrates four electronic control units (ECUs) included in the heated surface system of FIG. 1A according to some embodiments.
FIG. 2 illustrates a graphical user interface for controlling the heated surface system of FIG. 1A according to some embodiments.
FIG. 3 illustrates a set of icons designating an operating state of the heated surface system of FIG. 1A according to some embodiments.
FIG. 4 is a state diagram illustrating a method of operating the heated surface system of FIG. 1A according to some embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

It should also be noted that a plurality of hardware and software-based devices, as well as a plurality of different structural components may be utilized to implement the embodiments provided herein. It should also be noted that a plurality of hardware and software-based devices, as well as a plurality of different structural components may be used to implement the invention. In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the invention may be implemented in software (e.g., stored on non-transitory computer-readable medium) executable by one or more processors. As such, it should be noted that a plurality of hardware and software-based devices, as well as a plurality of different structural components may be utilized to implement the invention. For example, "control units" and "controllers" described in the specification can include one or more processors, one or more application specific integrated circuits (ASICs), one or more memory modules including non-transitory computer-readable media, one or more input/output interfaces, and various connections (e.g., a system bus) connecting the components.

It will be appreciated that some embodiments may be comprised of one or more electronic processors such as microprocessors, digital signal processors, customized processors, and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, some embodiments may be implemented as a computer-readable storage medium having computer readable code stored thereon for programming a computer (e.g., comprising an electronic processor) to perform a method as described and claimed herein. Examples of such computer-readable storage media include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

It should be understood that although certain drawings illustrate hardware and software located within particular devices, these depictions are for illustrative purposes only. In some examples, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among multiple different devices. Accordingly, in the claims, if an apparatus, method, or system is claimed, for example, as including a controller, control unit, electronic processor, computing device, logic element, module, or other element configured in a certain manner, for example, to perform multiple functions, the claim or claim element should be interpreted as meaning one or more of such elements where any one of the one or more elements is configured as claimed, for example, to make any one or more of the recited multiple functions, such that the multiple elements, as a set in a collective nature, perform the multiple functions.

In this specification, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a," "has ...a," "includes ...a," or "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about," or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. A device or structure that is "configured" in a certain way is configured in at least that way but may also be configured in ways that are not listed.

It should be understood that while several elements are referred herein to being associated with a handlebar type system with two handgrips, embodiments described herein are not limited to a steering mechanism or handle with distinct left and right handgrips, and the embodiments described herein can be used with other types of steering mechanisms with other configurations (for example, a steering wheel) and for any user contact surface in a vehicle, such as, for example, a seat, a backrest, an armrest, a leg or foot rest, or the like. Also, in various configurations, elements described herein as being included or associated with a dual handgrip system may be included or associated with a system with a single handgrip. Furthermore, it should be understood that although the systems and methods are described herein as being applied to a motorcycle, it should be understood that the systems and methods described herein may be applied to other types of motorized vehicles.

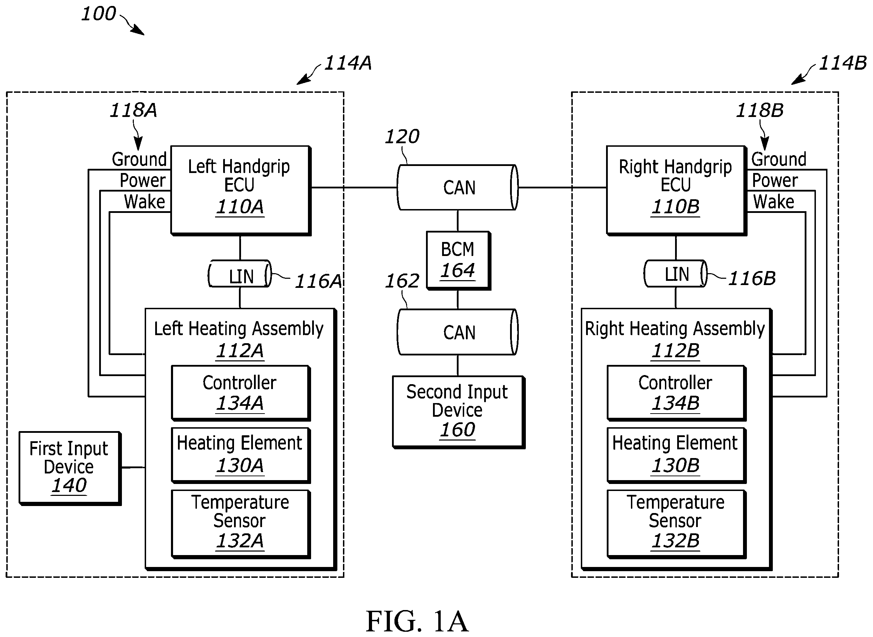

FIG. 1A schematically illustrates a heated surface system 100 for a vehicle in accordance with some embodiments. The system 100 is illustrated in FIG. 1A as a handgrip heating system 100 for heating a left and right handgrip 114A, 114B of a motorcycle. However, as noted above, the systems and methods described herein are not limited to motorcycles nor handgrips and can be used with various types of vehicles and for heating various surfaces of a vehicle. Also, it should be understood that although the system 100 is described with respect to a left and right heated handgrip, the system 100 may include only one heated handgrip (or one heated user contact surface) and, thus, may not include both the left-side components and the right-side component as illustrated in FIG. 1A. Furthermore, it should be understood that the configuration of components illustrated in FIG. 1A represents one example configuration and other configurations are possible where functionality described herein may be distributed and combined in various ways and the components may communicate in other configurations than the specific configuration illustrated. For example, in some embodiments, a single electronic control unit (ECU) may control and interface with heating assemblies on the left and right handgrips (e.g., as compared to having a dedicated ECU for both handgrip). Similarly, components described herein as being unique to one of the handgrips may be equally applicable to the other handgrip. For example, although an input device may be described as being mounted on the left handgrip, it should be understood that such an input device may alternatively be mounted on the right handgrip or that both handgrips may include such an input device. Also, the components described herein may be mounted in various locations on the motorcycle and are not limited to particular locations or configurations.

As illustrated in FIG. 1A, the system 100 includes four electronic control units (ECUs): a lefthand switch pack ECU 110A communicatively coupled to a lefthand heated grip ECU 112A for the left handgrip 114A of a vehicle, which is not shown (for example, a motorcycle) and a righthand switch pack ECU 110B communicatively coupled to a righthand heated grip ECU 112B for the right handgrip 114B of the vehicle. As noted above, it should be understood that the illustrated elements may be housed separately or together within one or more devices coupled to the vehicle, integrated within the vehicle, or a combination thereof.

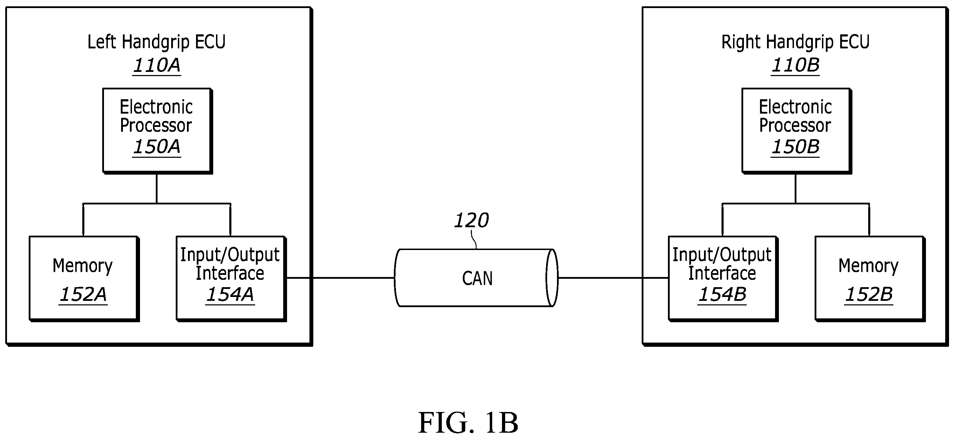

The components of the system 100 are communicatively coupled by one or more suitable wired and/or wireless connections (or combinations thereof). For example, as illustrated in FIG. 1, the lefthand switch pack ECU 110A and the lefthand heated grip ECU 112A are communicatively coupled via a connection 116A, such as, for example, a network connection, including, for example, a local interconnect network (LIN). The lefthand switch pack ECU 110A and the lefthand heated grip ECU 112A may also be connected via one or more dedicated (e.g., wired) connections 118A, including, for example, a power line, a ground line, and a WAKE line. Similarly, the righthand switch pack ECU 110B and the righthand heated grip ECU 112B are communicatively coupled via a connection 116B, such as, for example, a LIN. The righthand switch pack ECU 110B and the righthand heated grip ECU 112B may also be connected via one or more dedicated (e.g., wired) connections 118B, including, for example, a power line, a ground line, and a WAKE line.

The lefthand switch pack ECU 110A and the righthand switch pack ECU 110B may communicate over a connection 120, which may include a network connection, such as, for example, a controller area network (CAN) bus that, in some embodiments, represents a main or primary CAN bus of the vehicle.

As illustrated in FIG. 1B, each switch pack ECU 110A, 110B includes an electronic processor 150A, 150B; a memory 152A, 152B; and an input/output (I/O) interface 154A, 154B. The illustrated components, along with other various modules and components are connected to each other by or through one or more control or data buses that enable communication therebetween. It should be understood that each switch pack ECU 110A, 110B may include additional or fewer components in various configurations. For example, in some embodiments, the lefthand switch pack ECU 110A, the righthand switch pack ECU 110B, or both may include multiple electronic processors, multiple memory modules, multiple I/O interfaces, or a combination thereof.

Each electronic processor 150A, 150B may include one or more microprocessors, an application-specific integrated circuit (ASIC), or another suitable electronic device. The electronic processor 150A, 150B obtains and provides information (e.g., to and from the memory 152A, 152B and/or the I/O interface 154A, 154B) and processes the information by executing one or more software instructions or modules, capable of being stored, for example, in a random access memory ("RAM") area of the respective memory 152A, 152B, a read only memory ("ROM") of the memory 152A, 152B, or another non-transitory computer readable medium (not shown). The software can include firmware, one or more applications, program data, filters, rules, one or more program modules, and other executable instructions. Each electronic processor 150A, 150B may be configured to retrieve from the respective memory 152A, 152B and execute, among other things, instructions related to the processes and methods described herein. However, as described in more detail below, in some embodiments, the processes and methods described herein may be performed via one of the switch pack ECUs 110A, 110B, such as, for example, the lefthand switch pack ECU 110A, which may be designated as the primary ECU for the system 100.

The I/O interface 154A, 154B allows the respective switch pack ECU 110A, 110B to communicate with components external to the switch pack ECU 110A, 110B. For example, the I/O interface 154A, 154B may include one or more wired pins or ports for receiving wiring, such as, for example, the dedicated connections 118A, 118B, the network connection 116A, 116B, and the CAN bus 120. Although not shown in FIG. 1B, the I/O interface 154A, 154B, or both may also include one or more pins or ports for communicating with one or more user-actuator devices mounted on or associated with one of the handgrips 114A, 114B. It should be understood that, in some embodiments, the I/O interface 154A, 154B, or both may include a wireless transceiver for wireless communication with external components.

The system 100 is configured to provide heat at one or more areas of the handgrips 114A and 114B (for example, for user comfort). These surfaces may be referred to herein as "user contact surfaces" as such surfaces may interface with a portion of a user (e.g., driver, passenger, or both). In particular, as illustrated in FIG. 1B, each heated grip ECU 112A, 112B includes an electronic processor 160A, 160B; a memory 162A, 162B; and an I/O interface 164A, 164B, which may be similar to in electronic processors 150A, 150B; memories 152A, 152B; and I/O interfaces 154A, 154B as described above with respect to the switch pack ECUs 110A and 110B. As illustrated in FIG. 1B, each heated grip ECU 112A, 112B also include one or more heating elements 166A, 166B, and the switch pack ECUs 110A and 110B, as described in further detail below, are configured to control (through the heated grip ECUs 112A, 112B) the one or more heating elements 166A, 166B to reach a predetermined temperature threshold (for example, according to a user input or an automatic control), which may be selected from a plurality of predetermined temperature thresholds (e.g., "Low," "Medium," and "High"). The one or more heating elements 166A, 166B may include one or more kinds of suitable electronic heating element that convert electrical energy into heat (for example, a resistance wire/array, a ceramic/semiconductor device, a thick film heater, a polymer PTC heating element, etc.). The heating elements 166A, 166B may be positioned anywhere on and/or within the handgrips 114A, 114B, such as, for example, proximate to one or more user contact surfaces of the vehicle. In some embodiments, the "Low" temperature setting may be associated with a predetermined temperature threshold of approximately 110° F, the "Medium" temperature setting may be associated with a predetermined temperature threshold of approximately 130° F, and the "High" temperature setting may be associated with a predetermined temperature threshold of approximately 150° F. It should be understood that fewer or additional temperature settings or levels may be used and, in some embodiments, the temperature threshold corresponding to a temperature level may be a preconfigured default value or may be customizable by the user. Also, in some embodiments, the system 100 may allow a user to set different temperatures for each handgrip (e.g., for different surfaces). In this configuration, the lefthand switch pack ECU 110A may receive input (as described below) representing requested heating operations and each input may be tagged or otherwise identified as being specified for a particular handgrip, wherein the lefthand switch pack ECU 110A may be configured to transmit commands to the lefthand heated grip ECU 112A or the righthand switch pack ECU 110B depending on whether the received input is associated with the left or right handgrip 114A, 114B, respectively. Alternatively, input may be transmitted directly to the appropriate switch pack ECU (i.e., lefthand switch pack ECU 110A or righthand switch pack110B) associated with the input. For example, in some embodiments, each heated grip ECU 112A, 112B may be associated with a dedicated input device similar to the first input device 140 described herein. The temperature settings (available settings, temperature thresholds, a currently selected setting, or a combination thereof) may be stored in the memory 152A of the lefthand switch pack ECU 110A, the memory 152B of the righthand switch pack ECU 110B, or a combination thereof.

As illustrated in FIG. 1B, the heated grip ECUs 112A and 112B may also include one or more temperature sensors 168A, 168B that detect a temperature of the handgrips 114A and 114B. Temperatures detected by the sensors 168A, 168B may be provided, as feedback, to the electronic processor 160A, 160B included in each heated grip ECU 112A, 112B, wherein the electronic processors 160A, 160B use the detected temperatures to control to the heating elements 166A, 166A (e.g., turn on or off or modify a variable power level provided to the heating element) to maintain a temperature of the handgrips 114A, 114B at the predetermined temperature threshold. The electronic processors 160A, 160B may also report detected temperatures to the associated switch pack ECU 110A, 110B (e.g., via the respective I/O interface 164A, 164B), which the switch pack ECUs 110A and 110B may use to monitor operation of the heated grip ECUs 112A and 112B and, for example, detect faults. In response to detecting a fault, the switch pack ECUs 110A, 110B may be configured to disable their associated heated grip ECU 112A, 112B and, as described in more detail below, may report the fault to the other ECU so that both heated grip ECUs 112A, 112B may be disabled if either of the ECUs 112A, 112B experience a fault. In some embodiments, the electronic processors 160A, 160B may also be configured to detect faults and report such faults to the associated switch pack ECU 110A, 110B, which may be configured to take similar action as if the switch pack ECU 110A, 110B detected the fault. It should be understood that the lefthand switch pack ECU 110A, righthand switch pack ECU 110B, or both may be configured to perform additional functionality not described herein. For example, each switch pack ECU 110A, 110B may be configured to monitor the status of one more user-actuated device mounted on the associated handgrip, which may be used to control one or more of a turn signal, headlights, a run or start state of the vehicle, a brake, a horn, cruise control, a clutch, radio or infotainment controls, or the like.

The switch pack ECUs 110A, 110B control the heated grip ECUs as described in more detail below. The switch pack ECUs 110A, 110B may be installed onto or integrated into the vehicle (or some combination thereof). For example, in some embodiments, the lefthand switch pack ECU 110A is positioned onto or within proximity to the left handgrip 114A, and the righthand switch pack ECU 110B is positioned onto within proximity to the right handgrip 114B. For example, in some embodiments the lefthand switch pack ECU 110A, the righthand switch pack ECU 110B, or both may be attachable to the vehicle (for example, attachable to a handlebar). In other embodiments, the lefthand switch pack ECU 110A, the righthand switch pack ECU 110B, or both is configured to be inserted into/installed within the handlebar (for example, into the respective handgrip 114A, 114B). The heated grip ECUs 112A, 112B may be positioned or configured in similar ways as the switch pack ECUs 110A, 110B and one or more of the heated grip ECUs 112A, 112B, the switch pack ECUs 110A, 110B, or a combination thereof may be an aftermarket accessory for the vehicle.

In some embodiments, the heated grip ECUs 112A, 112B may be an aftermarket accessory for the vehicle and the switch pack ECUs 110A, 110B may be configured to enable simple installation of the heated grip ECUs 112A, 112B by performing an automatic detect and configuration process upon connection. For example, in some embodiments, each switch pack ECU 110A, 110B may include one or more plugs or receptacles for receiving a mating mechanism on a heated grip ECU. When a heated grip ECU is coupled to a switch pack ECU, the heated grip ECU receives power from the switch pack ECU (e.g., via the power and ground lines) and may receive an analog signal (e.g., a high signal) on the WAKE line, which instructs the heated grip ECU to communicate with the switch pack ECU over the dedicated connection 116A, 116B (e.g., the dedicated LIN) and otherwise enter an active standby or "connected but off" state. Similarly, the switch pack ECU 110A, 110B can be configured to listen or query the dedicated network connection 116A, 116B to receive communications (e.g., one or more specific LIN messages) from the heated grip ECU, which the switch pack ECU uses to identify whether a heated grip has been installed and configure an installed heated grip. In other words, the switch pack ECU 110A, 110B is configured to automatically "sense" or detect an installed heated grip and configure the heated grip ECU 112A, 112B for operation (e.g., without requiring any type of software reflash, dealer update, install, or configuration, or the like). In response to detecting an installed heated grip ECU, the system 100 may be configured to activate one or more menus or graphical user interfaces (GUls) provided through the second input device 180 as described below. Similarly, in response to detecting that a heated grip ECU is not installed or is otherwise not active, the system 100 may be configured to deactivate one or more menus or GUIs.

In some embodiments, when a heated grip ECU 112A, 112B is connected to a switch pack ECU 110A, 110B and subsequently detected and configured, the switch pack ECU 110A, 110B may check firmware of the heated grip ECU 112A, 112B. In response to determining that the firmware needs to be updated, a software update is pushed to the heated grip ECU 112A, 112B (e.g., from the switch pack ECU 110A, 110B, another device installed on the vehicle, an external device, such as, for example, a portable electronic communication device communicatively coupled to the vehicle, or a combination thereof). This automatic software update can similarly be performed without the need for a user to take the vehicle to a dealer, which, again, improves the ease at which a user can install, configure, and use heated grips.

The lefthand switch pack ECU 110A may be designated as the primary ECU for the system 100. For example, as illustrated in FIG. 1, the system 100 includes a first input device 140, which may be included in or coupled to the lefthand heated grip ECU 112A. The first input device 140 may include a button, a dial, a switch, or the like that receives input from the user regarding the system 100. For example, in some embodiments, the first input device 140 includes a momentary button that allows a user to toggle through a plurality of modes or levels (e.g., "Off," "Low," "Medium," and "High") of the system 100, wherein each level is associated with a predetermined temperature threshold. In some embodiments, the first input device 140 is mounted on the left handgrip 114A. In some embodiments, where the first input device 140 includes a momentary button, it should be understood that user activations of different lengths, speeds, or forces may trigger different action by the system 100. For example, in some embodiments, a short press of the button (e.g., less than a predetermined time period) may toggle the system 100 to the next state in a predetermined sequence of states, wherein a long press of the button (e.g., greater than the predetermined time period) may toggle the system to a predetermined state. For example, a long press of the button may toggle the system 100 to an "Off" state regardless of the current state.

The electronic processor 160A included in the lefthand heated grip ECU 112A monitors the state of (i.e., input received via) the first input device 140 and provides this input to the lefthand switch pack ECU 110A (e.g., as received or as a processed version). The lefthand switch pack ECU 110A, as the primary ECU, maintains (e.g., stores a value or indicator) the status of the system 100 (e.g., whether the system 100 is on or off, a currently-selected temperature level, a detected fault, etc.) and communicates this status to other components of the system 100. For example, based on the information received from the electronic processor 160A regarding the first input device 140, the lefthand switch pack ECU 110A may instruct the lefthand heated grip ECU 112A (i.e., the electronic processor 160A) to control the one or more heating elements 166A to achieve a predetermined temperature threshold (or turn off the one or more heating elements 166A as instructed).

The lefthand switch pack ECU 110A may also communicate a status to the righthand switch pack ECU 110B over the CAN bus 120. Similar to the lefthand switch pack ECU 110A, the righthand switch pack ECU 110B may instruct, based on the status communicated from the lefthand switch pack ECU 110A, the righthand heated grip ECU 112B (i.e., the electronic processor 160B) to control the one or more heating elements 166B to achieve the predetermined temperature threshold (or turn off the one or more heating elements 166B as instructed). Accordingly, in some embodiments, the righthand switch pack ECU 110B may be considered the secondary ECU of the system 100 and may follow status information provided via the lefthand switch pack ECU 110A. The righthand switch pack ECU 110B may also communicate fault information back to the lefthand switch pack ECU 110A when the righthand switch pack ECU 110B and/or the electronic processor 160B detects a fault. Based on faults detected by the righthand switch pack ECU 110B (the electronic processor 160B), the righthand switch pack ECU 110B may also be configured to respond to the detected fault (e.g., by disabling the righthand heated grip ECU 112B) independently (e.g., without waiting for instructions from the lefthand switch pack ECU 110A).

As illustrated in FIG. 1A, the system 100 also includes a second input device 180. The second input device 180 represents an additional input device for controlling the system 100 such that there are multiple input devices provided to a user for controlling the system 100. In some embodiments, the second input device 180 may be a similar device or mechanism as the first input device 140, such as, for example, a button, switch, dial, etc., which may be mounted at a different position on the vehicle than the first input device 140. In other embodiments, the second input device 180 may be a distinct type of input device, which may be integrated into the vehicle or included in a portable electronic communication device (e.g., a smart phone, electronic tablet, smart watch or other wearable, or the like) configured to communicate with an integrated vehicle component (e.g., a wireless transceiver included in the vehicle).

For example, in some embodiments, the second input device 180 includes a touchscreen integrated into the vehicle (e.g., as part of a center console or instrument panel of the vehicle), a microphone, a camera, a display (e.g., an LED display, a liquid crystal display (LCD), or a combination thereof) with associated physical buttons, switches, dials, etc. (e.g., acting as a cursor control device within a GUI provided via the display), or a combination thereof. For example, the second input device 180 may be a touchscreen integrated into the vehicle, wherein the touchscreen communicates with or is part of an infotainment or other control system of the vehicle. The infotainment or control system may include one or ECUs that may include similar components as the switch pack ECUs 110A, 110B described (e.g., an electronic processor, memory, and I/O interface) and are configured to generate and output one or more graphical user interfaces (GUls) for display on the touchscreen (e.g., providing various virtual buttons or other selection mechanisms within the GUI), receive input via the touchscreen, and transmit the input (e.g., as received or as a processed version) to the lefthand switch pack ECU 110A.

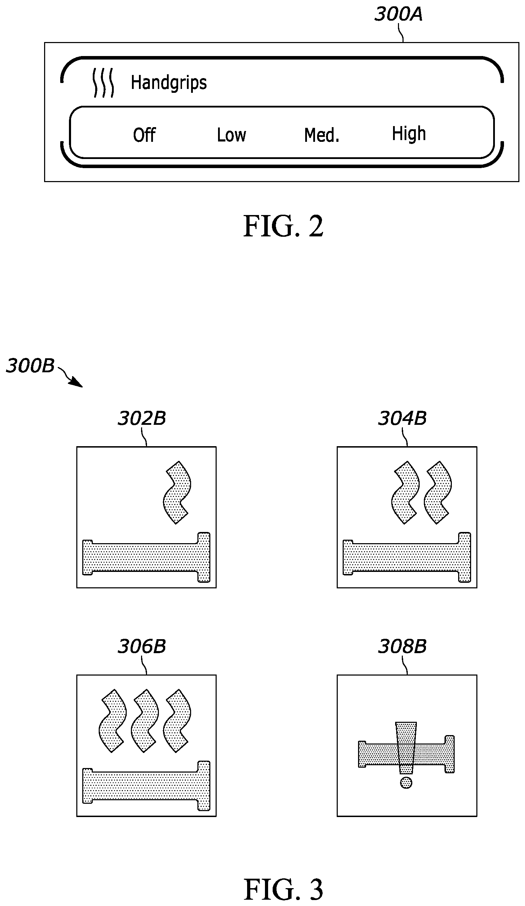

For example, FIG. 2 illustrates an example GUI 300A that may be displayed when the second input device 180 includes a touchscreen or other type of display. The GUI 300A allows a user to select (e.g., via a touch, through a cursor-controlled device or associated button, through a voice command or gesture, or a combination thereof) one of the available operating states of the system 100 (e.g., "Off," "Low," "Medium," or "High"). It should be understood that the GUI 300A may be configured differently and may require additional selections to set or confirm an operating state selection within the GUI 300A. The lefthand switch pack ECU 110A may be configured to process input from the second input device 180 in a similar manner as described above with respect to input received via the first input device 140.

As noted above, the second input device 180 may integrated into the vehicle or may be part of an external device configured to communicate with an integrated component of the vehicle. For example, as an alternative to or as an addition to an integrated device, the second input device 180 may be a touchscreen, a microphone, a camera, a display with associated physical selection mechanisms, or a combination thereof integrated in a portable electronic communication device (e.g., a smart phone, electronic tablet, smart watch, etc.) that communicates (e.g., wirelessly) with the infotainment or another control system of the vehicle. For example, in some embodiments, the portable electronic communication device (which may include similar components as the switch pack ECUs 110A and 110B described herein) may execute a software application that provides one or more GUIs that allow a user to turn the system 100 on and off, set a temperature level, see a current temperature (measured via the one or more of the temperature sensors 168A, 168B) of one or more of the handgrips 114A, 114B, or a combination thereof. In such a configuration, the software application installed on the portable electronic device communicates (directly or indirectly over one or more wired or wireless communication networks, such as, for example, the Internet, Bluetooth, Wi-Fi, a cellular network, or the like) with the infotainment or other control system of the vehicle (e.g., an integrated wireless transceiver).

Accordingly, the second input device 180 may be configured to receive input represented as selections of virtual buttons or other selection mechanisms within a GUI, cursor-based selections made via a button, dial, switch, etc. associated with a displayed GUI, voice commands, gestures, or the like, all of which or any combination thereof, is provided to the lefthand switch pack ECU 110A for processing similar to input received from the first input device 140 described above. In some embodiments, the infotainment or control system associated with the second input device 180 may also be configured to automatically generate data for the system 100 and send information to the lefthand switch pack ECU 110A, which the lefthand switch pack ECU 110A may process similar to how the ECU 110A processes user input received from the first input device 140 or the second input device 180. For example, as described in more detail below, the infotainment or another control system of the vehicle (or a software application installed a portable electronic communication device that communicates with one or more components or systems of the vehicle) may provide information the lefthand switch pack ECU 110A regarding faults relating to the second input device 180 (in response to which the lefthand switch pack ECU 110A may ignore input received from the second input device 180 until the fault is cleared), operation commands based on weather or ambient temperature readings, or the like. In some embodiments, the lefthand switch pack ECU 110A may also or alternatively be configured to provide similar automatic control.

In some embodiments, the second input device 180 communicates with the CAN bus 120, which allows the second input device 180 to communicate with the lefthand switch pack ECU 110A. In other embodiments, as illustrated in FIG. 1A, the second input device 180 may communicate with a separate communication network (e.g., an additional or secondary CAN bus 162 of the vehicle) and, thus, may communicate with the CAN bus 120 (and the lefthand switch pack ECU 110A) indirectly. For example, as illustrated in FIG. 1A, in some embodiments, the second input device 180 communicates with a secondary CAN bus 162 and an intermediary device 170, such as, for example, a body control module (BCM) of the vehicle, acts as a gateway between the primary CAN bus 120 and the secondary CAN bus 162. For example, in some embodiments, the intermediary device 170 is configured to limit what messages transmitted on the secondary CAN bus 162 are transmitted (as transmitted on the secondary CAN bus 162 or after intermediate processing or revision) on the primary CAN bus 120 or vice versa. In some embodiments, the intermediary device 170 also acts as a security device, such that the intermediary device may activate or deactivate communication between the busses 120 and 162, such as, for example, deactivating communication in response to unauthorized access or a detected security attack on the vehicle. Accordingly, the intermediary device 170 can be configured to selectively transmit messages from the second input device 180 (transmitted on the secondary CAN bus 162) to the primary CAN bus 120, which allows the lefthand switch pack ECU 110A to receive information from the second input device 180.

Accordingly, the system 100 and, in particular, the lefthand switch pack ECU 110A, may operate the heated grip ECUs 112A, 112B based on input from the first input device 140 or the second input device 180. Providing multiple sources of input allows a user to continue to control the system 100 even if one of the input devices (e.g., the second input device 180 or the associated infotainment or control system) malfunctions or the user is unable to interface with one of the input devices (e.g., the second input device 180 if the user wants to keep his or her hands on the handlebar for driving stability). Also, in some embodiments and as described in more detail below, one or more ECUs included in the vehicle may be configured to automatically generate input for controlling the system 100, which the lefthand switch pack ECU 110A may process similar to input received via the first input device 140 or the second input device 180. Also, due to the redundant or multiple mechanisms for controlling the system 100, one of the first input device 140 and the second input device 180 may be disabled in particular situations (e.g., when the vehicle is moving or traveling at high speeds or when a device or associated system is malfunctioning) and the user can still control the system 100 through the other input device.

In some embodiments, the system 100 also includes one or more output devices for providing feedback to a user regarding a state of the system 100. For example, in some embodiments, the lefthand switch pack ECU 110A (or a separate component of the vehicle) may control (e.g., illuminate or flash (in a pattern)) one or more LEDs located on the vehicle (e.g., the handgrip 114A, 114B, or both) to indicate the current state of the system 100 (e.g., whether the system 100 is on or off and if on, what the temperature level is set, and/or whether a fault has been detected).

Similarly, in some embodiments, the lefthand switch pack ECU 110A, the righthand switch pack ECU 110B, or a combination thereof may output information to various vehicle components or external components communicating with vehicle components (e.g., a portable electronic communication device), which may be used to provide information regarding the system 100 to a user. For example, as described above, the lefthand switch pack ECU 110A may communicate a state of the system 100 over the CAN bus 120, which may be consumed and used by other vehicle components, including, for example, an infotainment or other control system of the vehicle, which may use the received information to output various indicators, turn on various lamps, log data, issue notifications, or the like. For example, the GUI 300A discussed above may highlight or mark the current state of the system 100 (as specified by the lefthand switch pack ECU 110A) even when the user did not use the GUI 300A to set the current state (i.e., the user used the first input device 140 to set the current state). For example, a current state of the system may be displayed in a different color (see, e.g., FIG. 2), font, size, animation, or the like or be marked with a circle, line, or other type of indicator distinguishing the state from other displayed states. In some embodiments, in response to the system 100 operating abnormally (e.g., a fault was detected), the GUI 300A or portions thereof may be greyed out meaning that the user cannot select any of the displayed indicators representing the different operating levels or modes. Alternatively or in addition, a fault message may be included in the GUI 300A (e.g., in place of or in addition to the selectable level indicators, which, as noted above, may be greyed out or be otherwise disabled).

In some embodiments, the GUI 300A may represent a menu screen that may be one of multiple screens available to the user, wherein the user may need to drill-down or navigate to using various menus and options. Accordingly, the user may close the GUI 300A after setting or viewing an operating state of the system 100. Thus, in some embodiments, one or more icons may be provided on other GUIs displayed on the touchscreen or display (e.g., a home screen or a header portion of other GUls) or other instrument panels or outputs. For example, FIG. 3 illustrates a plurality of icons 302B, 304B, and 306B each indicating a respective predefined temperature setting (Low, Medium, and High). FIG. 3 also includes an icon 308B for indicating to the user that the system 100 is operating abnormally and another icon 310B for indicating to the user that the heated grip functionality is available (i.e. on active standby). One of the icons illustrated in FIG. 3 may be selectively included in various GUIs or other indicators or displays to provide a user with notice of the current operating state of the system 100 (without forcing the user to navigate to the GUI 300A). Also, in some embodiments, an icon representing a grip (e.g., without any heat ray icons) may be displayed when heated grip ECU is detected or active in the system 100 (e.g., as described above) but is currently in an "Off" state. This icon can inform the user that a heated grip ECU has been detected and properly installed or enabled even before the user tries to use the heated grip ECU. In some embodiments, one or more GUIs may be provided (e.g., via the second input device 180) that may aid the user in a configuration process, a troubleshooting process, a fault identification and response process, or a combination thereof. The GUIs may present textual information, audible information, graphical information, animated information (e.g., video), or a combination thereof to provide information to a user regarding how to install and/or use the system 100.

As noted above, in some embodiments, the system 100 may be configured for automatic control. This automatic control may include fault control. A fault may be include loss of communication on the CAN bus 120, CAN bus 162, the connection 116A, the connection 116B, or a combination thereof, a loss of temperature synchronization between the lefthand and righthand heated grip ECUs 112A, 112B (e.g., as compared by the lefthand switch pack ECU 110A), a loss of or inaccurate visual indication of heated grip status (e.g., via one or more GUls, icons, etc. as described above), a loss of accurate temperature regulation, or a loss of or irrational temperature data.

For example, as described above, the heated grip ECUs 112A, 112B (e.g., the electronic processors 160A, 160B) may be configured to detect faults, such as, for example, open and short faults and rationality faults (e.g., out of range temperatures) that may represent a loss of accurate temperature regulation or a loss of or irrational temperature data. In response to detecting such a fault, the heated grip ECUs 112A, 112B may send information to the associated switch pack ECU 110A, 110B, which may take appropriate action, such as, for example, disabling the system 100 (i.e., turning off the one or more heating elements 166A, 166B and putting the heated grip ECUs 112A, 112B in a disabled state where an action, such as, for example, a power cycle, is needed to clear the fault). For example, when the righthand heated grip ECU 112B detects a fault, the ECU 112B sends information regarding the fault to the righthand switch pack ECU 110B, which may be configured to disable the righthand heated grip ECU 112B and also forward the information to the lefthand switch pack ECU 110A (as the primary ECU for the system 100), which may be configured to similarly disable the lefthand heated grip ECU 112A and update the stored state of the system 100.

As also described above, the switch pack ECUs 110A, 110B may be configured to detect faults based on information received (or the lack of information received) from an associated heated grip ECU 112A, 112B. For example, in response to receiving information from the associated heated grip ECU 112A, 112B indicating a fault condition (regardless of whether the heated grip ECU 112A, 112B recognized the fault condition), the switch pack ECU 110A, 110B may disable the system 100. Accordingly, a switch pack ECU 110A, 110B may be configured to loss of communication errors, loss of temperature synchronization between the lefthand and righthand heated grip ECUs 112A, 112B, loss of accurate temperature regulation, loss of irrational temperature data, or a combination thereof. Again, in some embodiments, the lefthand switch pack ECU 110A may be responsible for disabling the system 100 and, as such, the righthand switch pack ECU 110B may report detected faults to the ECU 110A for handling. Alternatively, the righthand switch pack ECU 110B may be configured to independently handle or respond to detected faults, such as, for example, by disabling the righthand heated grip ECU 112B. The righthand switch pack ECU 110B may also, however, report the fault (and associated disablement) to the lefthand switch pack ECU 110A, which may update the state of the system 100 and, in some embodiments, disable the lefthand heated grip ECU 112A.In some embodiments, faults reported by the righthand switch pack ECU 110B may also be communicated to other vehicle components (ECUs), such as, for example, an infotainment system or other control system of the vehicle, which may consume the reported fault information by modifying one or more GUIs, telltales, indicators, icons, or the like.

Similar disabling of the system 100 may be performed in response to a switch pack ECU 110A, 110B failing to synchronize or detect and communicate with an associated heated grip ECU 112A, 112B (e.g., meaning that there is a communication failure or such ECUs 112A, 112B are not installed). For example, in some embodiments, the lefthand switch pack ECU 110A may be configured to request a temperature reading or status update from an associated heated grip ECU 112A and, in response to not receiving a reply (or receiving an improper reply) in a predetermined time period, may be configured to set the state of the system 100 to an inactive state, which may cause the system to be disabled (as described above for other types of faults). In this type of loss of communication situation (which may be associated with the CAN bus 120, the CAN bus 162, the connections 116A, 116B, or any combination thereof), in case communication over the connections 116A, 116B is faulty, the switch pack ECUs 110A, 110B may be configured to shut down any installed heated grip ECUs 112A, 112B via the WAKE line, which may be a control line providing a high or low analog signal (e.g., 5V or 0V signal). In response to the analog signal on the WAKE line being high or low (e.g., low signal may represent a disable command, the heated grip ECUs 112A, 112B will perform a hard shutdown.

Also, in some embodiments, the lefthand switch pack ECU 110A may be configured to compare temperature settings or current temperatures of the lefthand and righthand heated grip ECUs 112A, 112B to determine if the status of the righthand heated grip ECU 112B (as echoed by the righthand switch pack ECU 110B) does not match the commanded status or the status reported by the lefthand heated grip ECU 112A. In response to detecting such a power level synchronization fault, the lefthand switch pack ECU 110A may be configured to disable the system 100 as described above. Similarly, the lefthand switch pack ECU 110A may be configured to obtain a status from the second input device 180 or associated infotainment system or other control system regarding what status of the system 100 is being output to a user (e.g., via a GUI, telltale, icon, etc.) and may compare this status to the commanded status to determine if there is a power level synchronization fault. In response to detecting such a fault, the lefthand switch pack ECU 110A may be configured to disable the system 100 as described above.

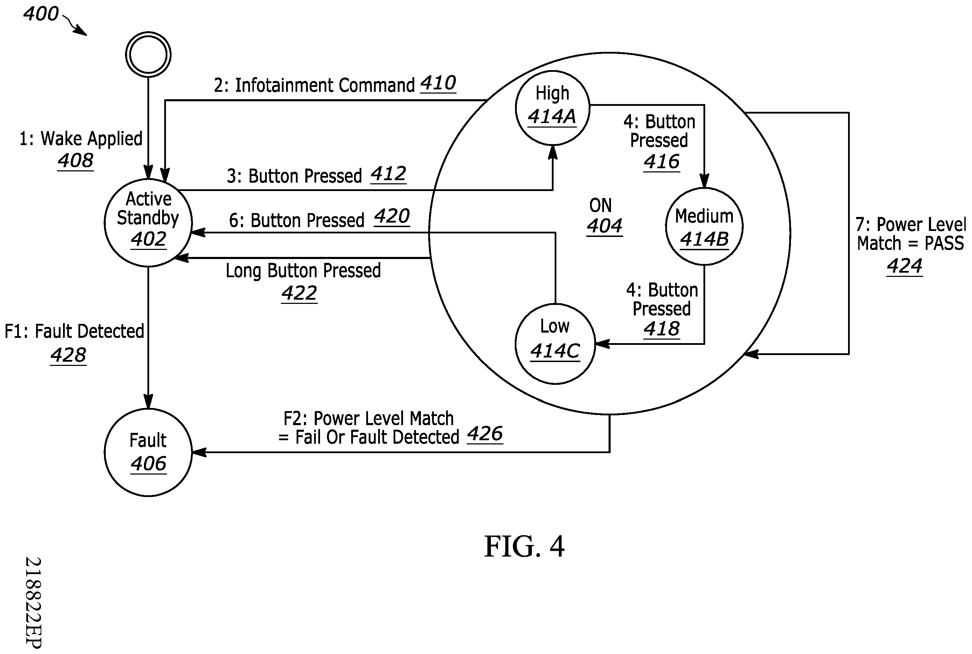

For example, FIG. 4 is a state diagram 400 illustrating operation of the system 100 according to some embodiments. The state diagram 400 is described herein in terms of the lefthand switch pack ECU 110A controlling the operational state of both the lefthand heated grip ECU 112A and, indirectly via commands to the righthand switch pack ECU 110B, the righthand heated grip ECU 112B. However, as noted above, the functionality illustrated in FIG. 4 may be implemented via different system configurations and devices and the functionality may be distributed among multiple devices or components.

The state diagram 400, in the illustrated example, includes three operational states of the system 100: an active standby state (also referred to as a "connected but off" state) 402, an on state 404, and a fault state 406. As described above, when the heated grip ECUs 112A, 112B are each coupled to the respective switch pack ECUs 110A, 110B, in addition to receiving power from the switch pack ECUs 110A, 110B, the heated grip ECUs 112A, 112B each receive, from the lefthand switch pack ECU 110A, a wake signal (at block 408). In response to receiving the wake signal at block 408, the lefthand switch pack ECU 110A is configured to operate the heated grip ECUs 112A, 112B in the active standby state 402.

While in the active standby state 402, the lefthand switch pack ECU 110A may command the heated grip ECUs 112A, 112B to transition to the on state 404 in response to receiving, from the second input device 180, a heating command ("Infotainment Command") (block 410) or in response to an actuation of the first input device 140 ("Button Pressed") (block 412) as described above. While in the on state 404, the heated grip ECUs 112A, 112B operate in one of three heating modes: a High heating mode 414A, a Medium heating mode 414B, and a Low heating mode 414C. The heated grip ECUs 112A, 112B operate the respective heating elements 166A, 166B to output a temperature according to the respective predefined High, Medium, and Low temperature setting for each respective mode, as described above.

In instances where the transition to the on state 404 occurs in response to a command from the second input device 180 (block 410), the heated grip ECUs 112A, 112B operate in the heating mode specified by the heating command and may transition to different heating modes according to any subsequent heating commands received from the second input device 180 (or in response to an actuation of the first input device 140 as described below). In instances where the transition to the one state 404 occurs in response to an actuation of the first input device 140 (block 412), the heated grip ECUs 112A, 112B are initially operated in the High heating mode 414A. While in the High heating mode 414A, the heated grip ECUs 112A, 112B may transition to the Medium heating mode 414B in response to an actuation of the first input device 140 (block 416), and, while in the Medium heating mode 414B, the heated grip ECUs 112A, 112B may transition to the Low heating mode 414C in response to an actuation of the first input device 140 (block 418). While in the Low heating mode 414C, the heated grip ECUs 112A, 112B may transition to the active standby state 402 in response to an actuation of the first input device 140 (block 420). Accordingly, the first input device 140 may allow a user to cycle through the available heating modes. It should be understood that the first input device 140 may include other mechanisms than just a single button and, in some embodiments, more than three heating modes may be available. For example, in some embodiments, a separate button, switch, or other input mechanism may be provided for each available heating mode, a separate button, switch, or other input mechanism may be provided for turning off the heated grips (e.g., to avoid having to cycle to the active standby state 402). Also, as described above, commands received via the second input device 180 may include a user-specified heating mode and, thus, do not require cycling through available heating modes. It should be understood that the first input device 140, the second input device 180, or a combination thereof may be used to control the heated grips. For example, a user may use the second input device 180 to turn on the heated grips and set a desired heating mode but thereafter may use the first input device 140 to change the heating mode or turn off the heated grips. Similarly, a user may use the first input device 140 to turn on the heated grips but thereafter may use the second input device 180 to change the heating mode or turn off the heated grips.

It should be understood that, in some embodiments, the heated grip ECUs 112A, 112B may activate in a different heating mode initially upon the transition from active standby state 402 into the on state 404 in response to the actuation of the first input device 140 (block 412). Furthermore, the order of subsequent transitions between modes in response to the actuation of the first input device 140 may be different in some embodiments (for example, ascending order starting from the Low heating mode 414C instead of descending order from the High heating mode 414A and/or the heating mode of the heated grip ECUs 112A, 112B may loop back to first heating mode following an actuation of the first input device 140).

Within any heating mode 414A - 414C in the on state 414, the lefthand switch pack ECU 110A may command the heated grip ECUs 112A, 112B to transition from the on state 414 to the active standby state 402 in response to either a predefined actuation sequence (in the illustrated embodiment, a long press of the first input device 140 ("Long Button Press") and/or a cancel heating command from the second input device 180 (block 422).

As illustrated in FIG. 4, when the heated grip ECUs 112A, 112B are operating in any of the heating modes 414A - 414C in the on state 404, as selected via the first input device 140 and/or the second input device 180, a check may be performed (e.g., via the lefthand switch pack ECU 110A) regarding whether there is a power level match (block 424). This match may look for synchronization between the lefthand and righthand heated grip ECUs 112A, 112B (e.g., both are set to the same level or are reporting temperatures consistent with the current level), synchronization between displayed outputs, or a combination thereof. As illustrated in FIG. 4, in response to detecting a mismatch (or another type of fault as described above), the lefthand switch pack ECU 110A commands the heated grip ECUs 112A, 112B to transition into the fault state 406 (block 426) and the system 100 is disabled as described above. The lefthand switch pack ECU 110A may also monitor for and detect a fault while the heated grip ECUs 112A, 112B are operating in the active standby state 402 and, in response, may command the heated grip ECUs 112A, 112B to transition into the fault state 406 (block 428). The heated grip ECUs 112A, 112B may remain in the fault state 406 until power is cycled to the system 100 (e.g., a new high or activate signal is applied via the WAKE lines).

Also, in some embodiments, the system 100 may be configured to reduce one or more of the predetermined temperature thresholds (or a user set temperature threshold) based on information from a power or charging management system of the vehicle (for example, received via the CAN bus 120 from the intermediary device 170) (e.g., to perform load shedding). For example, the lefthand switch pack ECU 110A may be configured to reduce or completely disable the predetermined temperature thresholds in response to determining, via the power management system, that a vehicle battery or other power source is below a predetermined capacity threshold. This load shedding functionality may be implemented as part of the functionality described above with respect to FIG. 4 and may include transitioning the system 100 to the fault state 406 or the active standby state 402 in response to receiving a command form a power management system of the vehicle to perform loading shedding. In some embodiments, more than one level of load shedding may be used. For example, a first level of load shedding may reduce a predetermined temperature threshold to conserve power while still providing heating, and a second level of loading shedding may disable one or more heating modes of the system 100. When heating of the system 100 is disabled, the system 100 may remain in that state until power is cycled, a command is received form the power management system or another vehicle system clearing the load shedding command, or a combination thereof.

As another example (that may be combined with the functionality described above with respect to FIG. 4, the load shedding described above, or a combination thereof), the system 100 may be configured to adjust a heating operation of the system 100 based on environmental temperature information. The environmental temperature information may be determined via one or more temperature (ambient) sensors of the system 100, one or more additional sensors (not shown) disposed on the vehicle, and/or weather information from one or more third party communications networks (not shown) in communication with lefthand switch pack ECU 110A (e.g., through an infotainment or other control system of the vehicle). For example, the lefthand switch pack ECU 110A may be configured to automatically start operation of the heated grip ECUs 112A, 112B in response to determining that the ambient temperature of the vehicle is below a predetermined threshold, may be configured to automatically stop operation of the heated grip ECUs 112A, 112B in response to determining the ambient temperature of the vehicle is above a predetermined threshold, or a combination thereof. In some embodiments, different thresholds or ranges may be set for different temperature levels of the heating system 100. For example, different thresholds may be used to determined whether to automatically turn on the heated grip ECUs 112A, 112B at the low level, the medium level, or the high level. In some embodiments, these thresholds may be preset or may be customizable by a user. These levels may also vary based on a current speed of the vehicle. For example, at higher speeds, a user may experience cooler conditions and, thus, the system 100 may be automatically turned on in response to detecting a lower ambient temperature when the vehicle is traveling at a low speed as compared to a higher ambient temperature when the vehicle is traveling at a higher speed. Also, in some embodiments, vehicle speed may be used on its own to control automatic control of the system 100. For example, different vehicle speeds (which may be read from the CAN bus 120 or other sources) may trigger automatic turning on of the system 100 at a particular level or automatic turning off of the system 100. In other words, the system 100 may be automatically turned on at the "Low" level when the vehicle is traveling above a first speed and may be automatically turned on at the "Medium" level when the traveling is traveling above a second speed (greater than the first speed) regardless of any ambient temperature readings. Accordingly, various customizable aspects are available where a user may specify one or more thresholds (e.g., based on ambient temperature, vehicle location, terrain, speed, weather, time of day, time of year, user equipment, such as gloves, jackets, other heated accessories, etc., passenger presence, or the like) for when the system 100 is turned on or turned off and, if turned on, what level the system 100 should be turned on to. In some embodiments, these customizable configurations can be made by a user via the second input device 180 (e.g., through one or more GUIs).

Thus, embodiments described herein provide, among other things, a heated user contact surface system for a vehicle, such as, for example, a system for heating handgrips on a handlebar of a motorcycle. Multiple input devices (communicating with the system over different connections and/or networks) may be provided to allow a user to control the heated surface system even if one of the input devices malfunctions or otherwise is inaccessible. Also, the heated surface system can implement various automatic control features to ease use by the user as well as to detect and handle fault conditions. The use of separate ECUs and a dedicated communication connection between the ECUs on each handgrip also improves the ease of installation and use of the heated system. For example, in some embodiments, a user can plug a heated grip ECU into a handgrip switch pack ECU and the components are configured to detect each other and establish communication, which allows the user to easily install aftermarket heated grips without requiring a software reflash, dealer installation, or the like. Establishing one of the heated grips as a primary ECU also eases control and communication of the system.

In the foregoing specification, specific embodiments are described. Accordingly, the specification and figures are to be regarded in an illustrative rather than a restrictive sense, and all such modifications are intended to be included within the scope of present teachings.

Various features and advantages of the embodiments presented herein are set forth in the following claims.

## Claims

1. A handgrip heating system (100) for a vehicle, the system (100) including:
a heating element (166) positioned proximate to a user contact surface of the vehicle;
a first input device (140) for receiving user input for controlling the heating element (166), the first input device (140) communicatively coupled to an electronic control unit over a first connection; and
a second input device (180) for receiving user input for controlling the heating element (166), the second input device (180) communicatively coupled to the electronic control unit over a second connection different from the first connection, wherein the electronic control unit is configured to control the heating element (166) based on user input received via the first input device (140) or the second input device (180),
**characterized in that** the electronic control unit is further configured to:
disable the heating element (166) in response to loss of communication on the first connection and/or the second connection; or
determine a status of the system (100) as reported via the second input device (180) and, in response to the status of the system (100) as reported via the second input device (180) being inaccurate or lost, disable the heating element (166).

2. The system (100) of claim 1, wherein the vehicle is a motorcycle and the user contact surface includes a handgrip of the motorcycle.

3. The system (100) of claim 2, wherein the first user input device includes a button mounted on a handlebar of the vehicle.

4. The system (100) of claim 3, wherein the second user input device includes a touchscreen mounted on the vehicle.

5. The system (100) of claim 4, wherein the touchscreen is included in an infotainment system installed on the vehicle.

6. The system (100) of claim 3, wherein the second user input device includes a touchscreen in a portable electronic communication device, the portable electronic communication device wirelessly communicating with a transceiver included in the vehicle.

7. The system (100) of claim 1, wherein the first connection includes a local interconnect network and wherein the second connection includes a controller area network.

8. The system (100) of claim 1, wherein the electronic control unit is further configured to automatically turn on or turn off the heating element (166) based on environmental temperature information and a temperature threshold.

9. The system (100) of claim 8, wherein the temperature threshold is associated with one of a plurality of temperature levels.

10. The system (100) of claim 1, wherein the electronic control unit is further configured to automatically turn off the heating element (166) based on a battery level of the vehicle.

11. The system (100) of claim 1, wherein the electronic control unit is further configured to disable the heating element (166) in response to detecting a fault.

12. The system (100) of claim 11, wherein the electronic control unit is configured to disable the heating element (166) via a command transmitted on the first connection.

13. The system (100) of claim 11, wherein the electronic control unit is configured to disable the heating element (166) via a command transmitted on a wired connection to the heating element (166).

14. The system (100) of claim 1, wherein the electronic control unit is further configured to disable the heating element (166) in response to failing to detect a current state of the heating element (166).

15. The system (100) of claim 1, wherein the electronic control unit is a switch pack electronic control unit and wherein the heating element (166) is included in a heated grip electronic control unit.

16. A method for operating a heating element (166) of a handgrip heating system (100) for a vehicle, the method comprising:
receiving, from a first input device (140) over a first connection, user input for controlling the heating element (166);
receiving, from a second input device (180) over a second connection, user input for controlling the heating element (166), the second connection being different from the first connection; and
controlling the heating element (166) based on the user input received from the first input device (140) or the second input device (180), the heating element (166) being positioned proximate to a user contact surface of the vehicle,
**characterized by**:
disabling the heating element (166) in response to loss of communication on the first connection and/or the second connection; or
determining a status of the system (100) as reported via the second input device (180) and, in response to the status of the system (100) as reported via the second input device (180) being inaccurate or lost, disabling the heating element (166).

## Patentansprüche

1. Handgriffheizsystem (100) für ein Fahrzeug, wobei das System (100) umfasst:
ein Heizelement (166), das in der Nähe einer Nutzerkontaktfläche des Fahrzeugs angeordnet ist;
eine erste Eingabeeinrichtung (140) zum Empfangen einer Nutzereingabe zum Steuern des Heizelements (166), wobei die erste Eingabeeinrichtung (140) über eine erste Verbindung kommunikativ mit einer elektronischen Steuereinheit gekoppelt ist; und
eine zweite Eingabeeinrichtung (180) zum Empfangen einer Nutzereingabe zum Steuern des Heizelements (166), wobei die zweite Eingabeeinrichtung (180) über eine zweite Verbindung, die sich von der ersten Verbindung unterscheidet, kommunikativ mit der elektronischen Steuereinheit gekoppelt ist, wobei die elektronische Steuereinheit konfiguriert ist, das Heizelement (166) auf Grundlage einer Nutzereingabe, die über die erste Eingabeeinrichtung (140) oder die zweite Eingabeeinrichtung (180) empfangen wird, zu steuern,
**dadurch gekennzeichnet, dass** die elektronische Steuereinheit ferner konfiguriert ist:
das Heizelement (166) als Reaktion auf einen Kommunikationsausfall auf der ersten Verbindung und/oder der zweiten Verbindung zu deaktivieren; oder
einen Status des Systems (100) zu bestimmen, wie er über die zweite Eingabeeinrichtung (180) gemeldet wird, und als Reaktion darauf, dass der über die zweite Eingabeeinrichtung (180) gemeldete Status des Systems (100) ungenau oder verloren gegangen ist, das Heizelement (166) zu deaktivieren.

2. System (100) nach Anspruch 1, wobei das Fahrzeug ein Motorrad ist und die Nutzerkontaktfläche einen Handgriff des Motorrads umfasst.

3. System (100) nach Anspruch 2, wobei die erste Nutzereingabeeinrichtung eine Taste umfasst, die an einer Lenkstange des Fahrzeugs angebracht ist.

4. System (100) nach Anspruch 3, wobei die zweite Nutzereingabeeinrichtung einen Touchscreen umfasst, der am Fahrzeug angebracht ist.

5. System (100) nach Anspruch 4, wobei der Touchscreen in einem Infotainmentsystem enthalten ist, das am Fahrzeug installiert ist.

6. System (100) nach Anspruch 3, wobei die zweite Nutzereingabeeinrichtung einen Touchscreen in einer tragbaren elektronischen Kommunikationsvorrichtung umfasst, wobei die tragbare elektronische Kommunikationsvorrichtung drahtlos mit einem im Fahrzeug enthaltenen Sendeempfänger kommuniziert.

7. System (100) nach Anspruch 1, wobei die erste Verbindung ein lokales Verbindungsnetzwerk umfasst und wobei die zweite Verbindung ein Controller Area Network umfasst.

8. System (100) nach Anspruch 1, wobei die elektronische Steuereinheit ferner konfiguriert ist, das Heizelement (166) auf Grundlage von Umgebungstemperaturinformationen und eines Temperaturschwellenwerts automatisch ein- oder auszuschalten.

9. System (100) nach Anspruch 8, wobei der Temperaturschwellenwert einem einer Vielzahl von Temperaturpegeln zugeordnet ist.

10. System (100) nach Anspruch 1, wobei die elektronische Steuereinheit ferner konfiguriert ist, das Heizelement (166) auf Grundlage eines Batteriepegels des Fahrzeugs automatisch auszuschalten.

11. System (100) nach Anspruch 1, wobei die elektronische Steuereinheit ferner konfiguriert ist, das Heizelement (166) als Reaktion auf das Erkennen eines Fehlers zu deaktivieren.

12. System (100) nach Anspruch 11, wobei die elektronische Steuereinheit konfiguriert ist, das Heizelement (166) über einen auf der ersten Verbindung übertragenen Befehl zu deaktivieren.

13. System (100) nach Anspruch 11, wobei die elektronische Steuereinheit konfiguriert ist, das Heizelement (166) über einen auf einer drahtgebundenen Verbindung zum Heizelement (166) übertragenen Befehl zu deaktivieren.

14. System (100) nach Anspruch 1, wobei die elektronische Steuereinheit ferner konfiguriert ist, das Heizelement (166) als Reaktion darauf zu deaktivieren, dass ein aktueller Zustand des Heizelements (166) nicht erkannt wird.

15. System (100) nach Anspruch 1, wobei die elektronische Steuereinheit eine elektronische Switch-Pack-Steuereinheit ist und wobei das Heizelement (166) in einer elektronischen Steuereinheit für einen beheizten Griff enthalten ist.

16. Verfahren zum Betreiben eines Heizelements (166) eines Handgriffheizsystems (100) für ein Fahrzeug, wobei das Verfahren umfasst:
Empfangen einer Nutzereingabe zum Steuern des Heizelements (166) von einer ersten Eingabeeinrichtung (140) über eine erste Verbindung;
Empfangen einer Nutzereingabe zum Steuern des Heizelements (166) von einer zweiten Eingabeeinrichtung (180) über eine zweite Verbindung, wobei sich die zweite Verbindung von der ersten Verbindung unterscheidet; und
Steuern des Heizelements (166) auf Grundlage der Nutzereingabe, die von der ersten Eingabeeinrichtung (140) oder der zweiten Eingabeeinrichtung (180) empfangen wird, wobei das Heizelement (166) in der Nähe einer Nutzerkontaktfläche des Fahrzeugs angeordnet ist,
**gekennzeichnet durch**:
Deaktivieren des Heizelements (166) als Reaktion auf einen Kommunikationsausfall auf der ersten Verbindung und/oder der zweiten Verbindung; oder
Bestimmen eines Status des Systems (100), wie er über die zweite Eingabeeinrichtung (180) gemeldet wird, und als Reaktion darauf, dass der über die zweite Eingabeeinrichtung (180) gemeldete Status des Systems (100) ungenau oder verloren gegangen ist, Deaktivieren des Heizelements (166).

## Revendications

1. Système de chauffage de poignée (100) pour un véhicule, le système (100) comprenant :
un élément chauffant (166) positionné à proximité d'une surface de contact utilisateur du véhicule ;
un premier dispositif d'entrée (140) pour recevoir une entrée utilisateur pour commander l'élément chauffant (166), le premier dispositif d'entrée (140) étant couplé en communication à une unité de commande électronique sur une première connexion ; et
un second dispositif d'entrée (180) pour recevoir une entrée utilisateur pour commander l'élément chauffant (166), le second dispositif d'entrée (180) étant couplé en communication à l'unité de commande électronique sur une seconde connexion différente de la première connexion, dans lequel l'unité de commande électronique est configurée pour commander l'élément chauffant (166) sur la base d'une entrée utilisateur reçue via le premier dispositif d'entrée (140) ou le second dispositif d'entrée (180),
**caractérisé en ce que** l'unité de commande électronique est en outre configurée pour :
désactiver l'élément chauffant (166) en réponse à une perte de communication sur la première connexion et/ou la seconde connexion ; ou
déterminer un état du système (100) tel que rapporté via le second dispositif d'entrée (180) et, en réponse à l'état du système (100) tel que rapporté via le second dispositif d'entrée (180) qui est inexact ou perdu, désactiver l'élément chauffant (166).

2. Système (100) selon la revendication 1, dans lequel le véhicule est une motocyclette et la surface de contact utilisateur comprend une poignée de la motocyclette.

3. Système (100) selon la revendication 2, dans lequel le premier dispositif d'entrée utilisateur comprend un bouton monté sur un guidon du véhicule.

4. Système (100) selon la revendication 3, dans lequel le second dispositif d'entrée utilisateur comprend un écran tactile monté sur le véhicule.

5. Système (100) selon la revendication 4, dans lequel l'écran tactile est inclus dans un système d'infodivertissement installé sur le véhicule.

6. Système (100) selon la revendication 3, dans lequel le second dispositif d'entrée utilisateur comprend un écran tactile dans un dispositif de communication électronique portable, le dispositif de communication électronique portable communiquant sans fil avec un émetteur-récepteur inclus dans le véhicule.

7. Système (100) selon la revendication 1, dans lequel la première connexion comprend un réseau d'interconnexion local et dans lequel la seconde connexion comprend un réseau de zone de contrôleur.

8. Système (100) selon la revendication 1, dans lequel l'unité de commande électronique est en outre configurée pour allumer ou éteindre automatiquement l'élément chauffant (166) sur la base d'informations de température environnementale et d'un seuil de température.

9. Système (100) selon la revendication 8, dans lequel le seuil de température est associé à l'un d'une pluralité de niveaux de température.

10. Système (100) selon la revendication 1, dans lequel l'unité de commande électronique est en outre configurée pour éteindre automatiquement l'élément chauffant (166) sur la base d'un niveau de batterie du véhicule.

11. Système (100) selon la revendication 1, dans lequel l'unité de commande électronique est en outre configurée pour désactiver l'élément chauffant (166) en réponse à la détection d'une défaillance.

12. Système (100) selon la revendication 11, dans lequel l'unité de commande électronique est configurée pour désactiver l'élément chauffant (166) via une commande transmise sur la première connexion.

13. Système (100) selon la revendication 11, dans lequel l'unité de commande électronique est configurée pour désactiver l'élément chauffant (166) via une commande transmise sur une connexion câblée à l'élément chauffant (166).

14. Système (100) selon la revendication 1, dans lequel l'unité de commande électronique est en outre configurée pour désactiver l'élément chauffant (166) en réponse à un échec de détection d'un état actuel de l'élément chauffant (166).

15. Système (100) selon la revendication 1, dans lequel l'unité de commande électronique est une unité de commande électronique de bloc de commutation et dans lequel l'élément chauffant (166) est inclus dans une unité de commande électronique de poignée chauffée.

16. Procédé de fonctionnement d'un élément chauffant (166) d'un système de chauffage de poignée (100) pour un véhicule, le procédé comprenant :
la réception, à partir d'un premier dispositif d'entrée (140) sur une première connexion, d'une entrée utilisateur pour commander l'élément chauffant (166) ;
la réception, à partir d'un second dispositif d'entrée (180) sur une seconde connexion, d'une entrée utilisateur pour commander l'élément chauffant (166), la seconde connexion étant différente de la première connexion ; et
la commande de l'élément chauffant (166) sur la base de l'entrée utilisateur reçue à partir du premier dispositif d'entrée (140) ou du second dispositif d'entrée (180), l'élément chauffant (166) étant positionné à proximité d'une surface de contact utilisateur du véhicule,
**caractérisé par** :
la désactivation de l'élément chauffant (166) en réponse à une perte de communication sur la première connexion et/ou la seconde connexion ; ou
la détermination d'un état du système (100) tel que rapporté via le second dispositif d'entrée (180) et, en réponse à l'état du système (100) tel que rapporté via le second dispositif d'entrée (180) qui est inexact ou perdu, la désactivation de l'élément chauffant (166).
